# EUROPÄISCHE PATENTANMELDUNG

(11) **EP 3 881 943 A1**
(43) Veröffentlichungstag der Anmeldung: **22.09.2021**
(21) Anmeldenummer: 20164575.1
(22) Anmeldetag: 20.03.2020
(51) Int. Cl.: B05D 1/28, B05D 3/06, B32B 37/00, B05D 5/12, B29C 37/00, C08J 5/12, B44C 1/17, B29C 63/00, B05D 7/14, B05D 3/12

(54) **TRANSFERLACKFOLIE ZUR LACKIERUNG EINES WERKSTÜCKS**

(71) Anmelder: Karl Wörwag Lack- und Farbenfabrik GmbH & Co. KG, 70825 Korntal-Münchingen (DE)
(72) Erfinder: WARTA, Helge, 71254 Ditzingen (DE)
(74) Vertreter: Patentanwaltskanzlei Cartagena

(57) **Zusammenfassung**

Eine Transferlackfolie (10) zur Lackierung eines Werkstücks (100) ist als Schichtverbund mit einer Trägerschicht (11) und mindestens einer Lackschicht (12) aufgebaut. Die Lackschicht (12) weist mindestens einen Bereich (13) auf, dessen Durchlässigkeit für elektromagnetische Strahlung gegenüber dem umgebenden Bereich erhöht ist. Die Transferlackfolie dient zur Lackierung eines Werkstücks (100), das mindestens einen Sensorbereich (102) aufweist.

## Beschreibung

Die vorliegende Erfindung betrifft eine Transferlackfolie zur Lackierung eines Werkstücks, wobei die Transferlackfolie ein Schichtverbund ist, der eine Trägerschicht und mindestens eine Lackschicht umfasst. Weiterhin betrifft die Erfindung ein Verfahren zur Herstellung einer Transferlackfolie sowie ein Verfahren zur Lackierung eines Werkstücks und ein entsprechend lackiertes Werkstück.

### ANWENDUNGSGEBIET UND STAND DER TECHNIK

Als Alternative zu klassischen Lackierverfahren, bei denen lösemittelhaltige oder auch lösemittelfreie Flüssiglacke oder Pulverlacke verwendet werden, sind seit einiger Zeit Transferlack-Techniken bekannt, die für die Übertragung des Lacks auf ein Werkstück einen Schichtverbund mit einer Trägerschicht, insbesondere einer flexiblen Trägerschicht, und mindestens einer Lackschicht verwenden. Der Schichtverbund kann beispielsweise als Bahnmaterial bereitgestellt werden. Zur Applizierung des Lacks wird der Schichtverbund mit der lackschichtigen Seite auf das zu lackierende Werkstück aufgebracht, wobei gegebenenfalls noch eine haftvermittelnde Schicht zwischen Werkstück und Lackschicht verwendet wird. Nach der Anhaftung der Lackschicht auf der Oberfläche des Werkstücks kann die Trägerschicht, beispielsweise eine Kunststofffolie, abgezogen und entfernt werden, wobei die Lackschicht oderdie Lackschichten auf dem Werkstückzurückbleiben. Beispielsweise beschreibt die DE 10 2007 040 376 A1 ein derartiges Verfahren, bei dem ein Schichtverbund mit einer Lackschicht zur Beschichtung eines Substrats, insbesondere zur Lackierung einer Fahrzeugkarosserie, eingesetzt wird.

Vor allem im Zusammenhang mit der Lackierung von Fahrzeugkarosserien ist die Überdeckung von in die Fahrzeugkarosserie integrierten Sensoren nicht unproblematisch. In modernen Kraftfahrzeugen werden vielfach Sensoren in die Karosserie eingebaut, beispielsweise im Front- und/oder Heckbereich. Weit verbreitet sind beispielsweise Abstandssensoren, die im Hinblick auf eine Einparkhilfe oder allgemein im Hinblick auf Fahrerassistenzsysteme zum Einsatz kommen. Bei solchen Sensoren kann es sich beispielsweise um Ultraschallsensoren oder Radarsensoren handeln. In der Regel arbeiten Sensoren für derartige Einsatzzwecke auf der Basis von empfangenen und/oder ausgesendeten elektromagnetischen Strahlen.

Da Sensoren, die in der Kraftfahrzeugkarosserie verbaut sind, nicht ohne weiteres von außen erkennbar sein sollen, ist es grundsätzlich gewünscht, dass die Bereiche der Karosserie, die mit Sensoren ausgestattet sind, in gleicher Weise wie die umgebenden Karosseriebereiche mit einer Lackierung bedeckt sind. Hierbei tritt allerdings das Problem auf, dass die aufgetragene Lackschicht das Empfangen und Senden von Signalen negativ beeinflussen kann. Dies hat zur Folge, dass eine herkömmliche Lackierung, welche Sensoren überdeckt, die Funktionsfähigkeit der verbauten Sensoren erheblich beeinträchtigen kann.

### AUFGABE UND LÖSUNG

Demgegenüber stellt sich die vorliegende Erfindung die Aufgabe, eine verbesserte Lösung zur Lackierung von Werkstücken, in die ein oder mehrere Sensoren integriert sind, bereitzustellen. Hierbei soll zum einen die Funktionsfähigkeit der Sensoren nicht beeinträchtigt werden. Zum anderen soll eine optisch optimale Abdeckung der Sensoren durch die Lackierung erreicht werden. Gleichzeitig sollen bei der Lackierung die bekannten Vorteile der Transferlack-Techniken (keine Lösemittelbelastung am Applikationsort, zentrale Produktion der Folien, Lackschichten mit gleichmäßiger Dicke und hoher Farbtreue) genutzt werden.

Diese Aufgabe wird durch eine Transferlackfolie, ein Verfahren zur Herstellung einer Transferlackfolie, durch ein Verfahren zur Lackierung eines Werkstücks sowie durch ein entsprechend lackiertes Werkstück gemäß den unabhängigen Ansprüchen gelöst. Bevorzugte Ausgestaltungen derTransferlackfolie, des Verfahrens zur Herstellung der Transferlackfolie und des Verfahrens zur Lackierung eines Werkstücks sowie des Werkstücks ergeben sich aus den abhängigen Ansprüchen.

Die erfindungsgemäße Transferlackfolie ist zur Lackierung eines Werkstücks vorgesehen, wobei dieses Werkstück insbesondere einen oder mehrere integrierte Sensoren aufweist. Der oder die Sensoren können in das Werkstück integriert oder an dem Werkstück angeordnet sein. Ein Oberflächenbereich des Werkstücks, unter oder hinter dem der oder die Sensoren angeordnet sind oder der durch den Sensor gebildet wird, bilden dabei einen Sensorbereich. Dieser Sensorbereich sowie gegebenenfalls weitere solcher Sensorbereiche sollen mit der Lackierung versehen werden.

Bei den Sensoren kann es sich um übliche Sensoren handeln, die insbesondere im Kraftfahrzeugbau verwendet werden. Allgemein eignet sich die erfindungsgemäße Transferlackfolie zur Lackierung von Werkstücken mit Sensoren, die auf der Basis des Versendens und/oder Empfangens von elektromagnetischer Strahlung arbeiten. Solche Sensoren können beispielsweise Radarsensoren, Lidarsensoren, Kameras oder Ultraschallsensoren umfassen.

Bei der Transferlackfolie selbst handelt es sich um einen Schichtverbund, der eine Trägerschicht, insbesondere eine flexible Trägerschicht, und mindestens eine Lackschicht aufweist. Bei der flexiblen Trägerschicht kann es sich beispielsweise um eine übliche Folie handeln, die herkömmlicherweise für Transferlackfolien verwendet wird.

Erfindungsgemäß zeichnet sich die Transferlackfolie dadurch aus, dass die mindestens eine Lackschicht mindestens einen Bereich aufweist, der im Vergleich mit dem umgebenden Bereich eine erhöhte Durchlässigkeit für elektromagnetische Strahlung aufweist. Dieser Bereich zeichnet sich also durch eine erhöhte Strahlungstransparenz im Vergleich mit der übrigen Lackschicht aus. Dieser Bereich der mindestens einen Lackschicht der Transferlackfolie mit der erhöhten Durchlässigkeit für elektromagnetische Strahlung ist insbesondere dazu vorgesehen, den Sensorbereich des Werkstücks, also den Bereich des Werkstücks, in den ein Sensor integriert ist, abzudecken bzw. zu überdecken. Hierdurch wird erreicht, dass das Werkstück einschließlich des Sensorbereichs flächig lackiert werden kann, wobei die Lackschicht in dem Bereich des Sensors in gewisser Weise geschwächt oder reduziert ist, so dass die Durchgängigkeit für elektromagnetische Strahlung gegenüber den umgebenden Bereichen verbessert ist und somit die volle Funktionsfähigkeit des integrierten Sensors, dessen Funktion auf dem Aussenden und dem Empfangen von Signalen auf der Basis von elektromagnetischer Strahlung basiert, gewährleistet ist.

In dem mindestens einen Bereich mit erhöhter Durchlässigkeit für elektromagnetische Strahlung wird die erhöhte Durchlässigkeit für elektromagnetische Strahlung in einer ersten prinzipiellen Ausgestaltung insbesondere durch mindestens eine durch die mindestens eine Lackschicht geführte Durchbrechung bewirkt. Bei der mindestens einen Durchbrechung handelt es sich bevorzugt um eine Mehrzahl von Löchern, die die Lackschicht in dem Bereich durchdringen und die dazu führen, dass der Bereich für elektromagnetische Strahlung deutlich besser durchgängig ist als der umgebende Bereich, der nicht solche Löcher aufweist. Anstatt von Löchern können auch andere Arten von Durchbrechungen vorgesehen sein, beispielsweise in Form einer Rasterung. Die Löcher oder die anderen Arten von Durchbrechungen können im Mikrometerbereich liegen und können beispielsweise einen Durchmesser im Bereich von 0,1 bis 500 µm aufweisen. Die Durchbrechungen können regelmäßig oder unregelmäßig angeordnet sein. Bei der Anordnung der Durchbrechungen kann es mit Vorteil vorgesehen sein, dass der mittlere Abstand zwischen den einzelnen Durchbrechungen größer als derdurchschnittliche und besonders bevorzugt größer als der maximale Durchmesser der Durchbrechungen ist. Beispielsweise kann der Bereich zwischen 5 und 1000 der Durchbrechungen aufweisen.

Neben der erhöhten Durchlässigkeit für elektromagnetische Strahlung kann durch diese Durchbrechungen als weiterer vorteilhafter Effekt die Realisierung von optischen Effekten erreicht werden. Beispielsweise können durch die Anordnung von Durchbrechungen in der Lackschicht Farbverläufe oder Dekore oder Muster in die Lackierung und insbesondere in die Farbe eingebracht werden, um so neben dem technischen Effekt der verbesserter Durchlässigkeit für elektromagnetische Strahlung im Hinblick auf die verbesserte Funktion der abgedeckten Sensoren zusätzlich einen ästhetischen oder designerischen Effekt zu realisieren.

Eine zweite prinzipielle Ausgestaltung des oder der Bereiche mit erhöhter Durchlässigkeit für elektromagnetische Strahlung sieht vor, dass der oder die Bereiche der Lackschicht(en) eine Schichtdicke aufweisen, die gegenüber der Schichtdicke des den Bereich umgebenden Bereichs verringert ist. Wenn also beispielsweise die mindestens eine Lackschicht eine gleichmäßige Schichtdicke von 100 µm aufweist, so ist in dem mindestens einen Bereich die Dicke des Lacks dem gegenüber verringert.

Auch mit dieser Ausführungsform des Bereichs dererhöhten Durchlässigkeit für elektromagnetische Strahlung kann ein Sensorbereich eines Werkstücks derart abgedeckt werden, dass auf der einen Seite die volle Funktionsfähigkeit des Sensors gegeben ist und auf der anderen Seite ein optisch optimales Ergebnis bei der Abdeckung des Sensors erreicht wird. Der Sensorbereich wird dabei in gezielter und definierter Weise mit einer etwas dünneren Lackierung als der übrige Bereich des Werkstücks versehen.

Es kann weiterhin vorgesehen sein, dass beide erwähnten Möglichkeiten zur Erzielung des Bereichs mit erhöhter Durchlässigkeit für elektromagnetische Strahlung miteinander kombiniert werden, sodass ein oder mehrere Bereiche in der Transferlackfolie bereitgestellt werden, die sich durch eine reduzierte Schichtdicke der Lackschicht in diesem Bereich auszeichnen, die zusätzlich eine mehrfache Durchbrechung, beispielsweise in Form von mehreren Löchern im Mikrometerbereich, aufweisen.

Wenn im Folgenden von einem oder mehreren Bereichen mit erhöhter Strahlungsdurchlässigkeit die Rede ist, sind dabei immer der oder die Bereiche gemeint, die sich durch eine im Vergleich mit den umgebenden Bereichen erhöhte Durchlässigkeit für elektromagnetische Strahlung auszeichnen.

Im Allgemeinen ist es vorgesehen, dass die Transferlackfolie mittels einer haftvermittelnden Schicht auf das zu lackierende Werkstück aufgebracht wird. Hierbei kann es insbesondere bei der Ausführungsform mit der bereichsweise verringerten Schichtdicke der Lackschicht vorgesehen sein, dass der Bereich der dünneren Lackschicht durch eine in diesem Bereich etwas dickere haftvermittelnde Schicht ausgeglichen wird, sodass die Oberfläche der Lackierung im Ergebnis völlig plan und optisch unauffällig ist.

Bei der Trägerschicht der erfindungsgemäßen Transferlackfolie handelt es sich vorzugsweise um eine Kunststofffolie, insbesondere eine Kunststofffolie mit einer gleichmäßigen Dicke zwischen 30 und 300 µm, insbesondere zwischen 100 und 150 µm, insbesondere von ca. 120 µm. Die Kunststofffolie kann aus einem unpolaren Kunststoff, beispielsweise aus der Gruppe der Polypropylene oder Phenoplaste, sein.

Vorzugsweise zeichnet sich die Trägerschicht durch eine derartige Flexibilität aus, dass sie auf gekrümmten Flächen aufgebracht werden kann und sich den vorhandenen Krümmungen anpasst. In anderen Ausgestaltungen kann es je nach Anwendung auch vorgesehen sein, dass die Trägerschicht mehr oder weniger starr ist.

Auch bei der mindestens einen Lackschicht kann es sich um eine oder mehrere übliche Lackschichten handeln, die in der Transferlack-Technik eingesetzt werden. Beispielsweise können die Lacke Polyurethanlacke sein. Ein bevorzugtes Beispiel sind Lacke auf Basis von Urethanacrylat. Im einfachsten Fall handelt es sich bei der mindestens einen Lackschicht um eine Schicht aus einem Klarlack oder um eine Schicht aus einem Farbpigmente enthaltenden Lack. Aber auch Kombinationen sind denkbar. So kann beispielsweise unmittelbar auf der Trägerschicht eine erste Lackschicht aus einem bevorzugt kratzfesten Klarlack angeordnet sein. Diese Klarlackschicht kann mit einerzweiten Schicht aus einem Farbpigmente enthaltenden Lack überdeckt sein.

Die mindestens eine Lackschicht weist bevorzugt eine gleichmäßige Schichtdicke im Bereich von 10-1000 µm, bevorzugt im Bereich von 10-500 µm, besonders bevorzugt im Bereich von 10-100 µm, auf.

Als Ausgangspunkt für die Herstellung der erfindungsgemäßen Transferlackfolien können beispielsweise herkömmliche Transferlackfolien verwendet werden, bei denen eine oder mehrere Lackschichten auf einer flexiblen Trägerschicht aufgebracht sind.

Der Umfang der Bereiche mit erhöhter Durchlässigkeit für elektromagnetische Strahlung wird zweckmäßigerweise in Anpassung an die jeweils abzudeckenden Sensorbereiche in dem zu lackierenden Werkstück gewählt. Beispielsweise kann für einen üblichen Abstandssensor ein kreisförmiger Bereich mit einem Durchmesser beispielsweise zwischen 1,5 cm und 5 cm geeignet sein.

Die Bereiche mit erhöhter Durchlässigkeit für elektromagnetische Strahlung weisen bevorzugt eine Fläche im Bereich von 0,5 cm² bis 500 cm², bevorzugt von 0,5 cm² bis 100 cm², besonders bevorzugt von 0,5 cm² bis 100 cm², auf.

Bei der Ausführungsform der Bereiche mit erhöhter Strahlungsdurchlässigkeit, bei der eine geringere Schichtdicke der Lackschicht in diesen Bereichen vorgesehen ist, kann an den tiefsten Punkten der Bereiche mit der verringerten Schichtdicke die Schichtdicke um bis zu 99 %, bevorzugt um bis zu 90 %, insbesondere um bis zu 50 %, gegenüber der Schichtdicke des den Bereich umgebenden Bereichs verringert sein.

In einer besonders bevorzugten Ausgestaltung der erfindungsgemäßen Transferlackfolie ist der o-dersind die Bereiche mit erhöhter Durchlässigkeit für elektromagnetische Strahlung durch eine Behandlung mit elektromagnetischer Strahlung, insbesondere durch eine Laserbehandlung, erzeugt. Durch die Behandlung mit elektromagnetischer Strahlung, insbesondere durch Laserablation, kann/können die Lackschicht(en) sehr gezielt und definiert in dem gewünschten Bereich zur Verringerung der Schichtdicke abgetragen werden oder mit der Laserbehandlung können mikroskopisch kleine Durchbrechungen bzw. Löcher in die Lackschicht bereichsweise eingebracht werden, um so den Bereich mit der erhöhten Strahlungsdurchlässigkeit herzustellen. Eine Laserbehandlung lässt sich in sehr vorteilhafter Weise realisieren, da eine entsprechende Behandlung sehr definiert und genau im Hinblick auf die Positionierung des Bereichs mit erhöhter Strahlungsdurchlässigkeit und beispielsweise im Hinblick auf die Tiefe und Ausgestaltung des Bereichs mit verringerter Schichtdicke eingestellt und ausgeführt werden kann. In anderen Ausführungsformen kann der oder können die Bereiche mit erhöhter Durchlässigkeit für elektromagnetische Strahlung auch durch mechanische Mittel erzeugt sein. Beispielsweise können kleine Löcher mit einer Nadelwalze in die Lackschicht in den entsprechenden Bereichen eingebracht sein.

Vorzugsweise ist/sind die Lackschicht(en) der Transferlackfolie bereits vollständig ausgehärtet und/oder vernetzt, bevor die Transferlackfolie auf dem Werkstück platziert wird. In einigen Fällen kann es aber auch bevorzugt sein, dass die Lackschichten zumindest bereichsweise unvernetzte Bestandteile enthalten, die nach der Applikation der Transferlackfolie ausgehärtet werden können, beispielsweise durch Strahlung.

In einer besonders bevorzugten Ausgestaltung der Transferlackfolie in der Ausführungsform mit verringerter Schichtdicke weist der Bereich mit der verringerten Schichtdicke einen flach verlaufenden Übergang zu dem umgebenden Bereich der Lackschicht(en) ohne verringerte Schichtdicke auf. Der

Übergang ist bevorzugt frei von mit bloßem Auge erkennbaren Stufen. Hierdurch wird ein sanfter Übergang zwischen den Bereichen mit der verringerten Schichtdicke und den umgebenden Bereichen hergestellt. Der besondere Vorteil dieser Ausgestaltung liegt vor allem darin, dass nach der Applikation der Transferlackfolie und nach dem Abziehen der Trägerschicht eine durchgängige Lackierung auf dem Werkstück erreicht wird, bei dem die in dem oder den Sensorbereichen verringerte Schichtdicke der Lackierung durch die sanften Übergänge zu den umliegenden Bereichen völlig unauffällig ist und an diesen Stellen beispielsweise keine Kanten oder anderen unschönen Effekte auftreten.

Die Erfindung umfasst weiterhin ein Verfahren zur Herstellung einer Transferlackfolie.

Die Transferlackfolie wird von einem Schichtverbund mit einer Trägerschicht, insbesondere einer flexiblen Trägerschicht, und mindestens einer Lackschicht gebildet. Bei dem Verfahren zur Herstellung einer solchen Transferlackfolie kann der Schichtverbund zunächst in an sich bekannter Weise hergestellt werden, indem die flächige Trägerschicht bereitgestellt wird und darauf in an sich bekannter Weise eine oder mehrere Lackschichten aufgebracht werden. Der Kern des erfindungsgemäßen Herstellungsverfahrens für eine Transferlackfolie liegt darin, dass die derart erstellte Transferlackfolie bereichsweise behandelt wird, um mindestens einen Bereich in der mindestens einen Lackschicht zu erzeugen, deren Durchlässigkeit für elektromagnetische Strahlung gegenüber den umgebenden Bereichen der Lackschicht(en) erhöht ist. Diese Bereiche mit erhöhter Strahlungsdurchlässigkeit können in bevorzugten Ausgestaltungen durch eine mehrfache Durchbrechung der Lackschicht(en) und/oderdurch eine Verringerung oder Schwächung der Schichtdicke in diesen Bereichen gegenüber den umgebenden Bereichen hergestellt werden. In der bereits beschriebenen Weise ist dieser Bereich oder sind diese Bereiche mit erhöhter Strahlungsdurchlässigkeit dazu vorgesehen, einen Sensorbereich eines Werkstücks abzudecken, um den Durchgang von elektromagnetischer Strahlung für die Funktion des Sensors nicht zu behindern.

In besonders bevorzugter Weise erfolgt bei dem Verfahren zur Herstellung dieser Transferlackfolie die Behandlungzur Erzeugung des oder der Bereiche mit erhöhter Strahlungsdurchlässigkeit mittels elektromagnetischer Strahlung, insbesondere mit Laserstrahlung. Durch eine solche Laserbehandlung können beispielsweise der oder die Bereiche mit verringerter Schichtdicke oder die Durchbrechungen der Lackschicht(en) in den Bereichen in besonders präziser und definierter Weise erzeugt werden, indem die Lackschicht(en) in diesen Bereichen definiert und präzise teilweise abgetragen oder durchlöchert oder gerastert wird/werden. Alternativ oder zusätzlich ist auch eine Behandlung mit mechanischen Mitteln möglich, beispielsweise mittels einer Nadelwalze oder ähnlichem.

Für diese Behandlung wird die Transferlackfolie vor der Laserbehandlung oder vor der mechanischen Behandlung vorzugsweise auf ein flaches, insbesondere ebenes Substrat aufgebracht, bevor in gesteuerter Weise die Laserbehandlung und/oder die mechanische Behandlung erfolgt. Hierin liegt ein besonderer Vorteil des erfindungsgemäßen Verfahrens, denn durch die flächige Ausbreitung derzu behandelnden Transferlackfolie kann die Laserbehandlung oder allgemein die Behandlung mit elektromagnetischer Strahlung oder die mechanische Behandlung im Prinzip in zweidimensionaler Weise erfolgen, wodurch eine sehr genaue Steuerung der bereichsweise Behandlung, beispielsweise des Lackschichtenabtrags zur Erzeugung der verringerten Schichtdicke oder die Durchbrechung der Lackschicht, möglich ist. Eine entsprechende Abtragung oder eine entsprechende Lochung oder Rasterung der Lackschicht(en) in den Sensorbereichen durch eine nachträgliche Behandlung der bereits applizierten Transferlackfolie bzw. nach der erfolgten Lackierung ist in dieser Weise nicht möglich, da die zu lackierenden Werkstücke in der Regel dreidimensional sind, also verschiedene Krümmungen und Formungen aufweisen, so dass eine präzise Behandlung zur Erzeugung der Bereiche mit erhöhter Strahlungsdurchlässigkeit in diesem Stadium wesentlich schwieriger wäre.

Vorzugsweise ist die mindestens eine Lackschicht des Schichtverbunds bzw. der Transferlackfolie vorder Behandlungzur Erzeugung des Bereichs mit erhöhter Strahlungsdurchlässigkeit bereits ausgehärtet und/oder vernetzt, wie es oben bereits erwähnt wurde. Mit dem Begriff "Aushärtung" bzw. "Vernetzung" ist gemeint, dass in der Lackschicht im Wesentlichen keine vernetzbaren chemischen Gruppen mehr vorhanden sind und/oder dass kein Lösemittel mehr enthalten ist. Die Aushärtung kann beispielsweise durch entsprechende Temperaturbehandlungen, beispielsweise zur Verdunstung von Lösemittel, oder durch Strahlenbehandlung, beispielsweise durch UV-Bestrahlung, erfolgen, wie es an sich bekannt ist.

In bevorzugten Ausführungsformen kann es bei einer Lackierung unter Verwendung von Transferlackfolien vorgesehen sein, dass die Lackschichten noch nicht oder noch nicht vollständig ausgehärtet und/oder vernetzt sind. In diesen Fällen erfolgt die Aushärtung und/oder Vernetzung erst nach der Aufbringung der Transferlackfolie auf das Werkstück. Hierfür ist es zweckmäßig, dass die mindestens eine Lackschicht während der Erzeugung der Bereiche mit erhöhter Strahlungsdurchlässigkeit gleichfalls noch nicht vollständig ausgehärtet und/oder vernetzt ist.

In der Ausführungsform mit der verringerten Schichtdicke in den Bereichen mit der erhöhten Strahlungsdurchlässigkeit wird in besonders bevorzugter Weise bei dem Verfahren zur Herstellung der Transferlackfolie bei der bereichsweisen Behandlung der oben erwähnte flach verlaufende Übergang zwischen dem bzw. den Bereichen mit der verringerten Schichtdicke und den jeweils umgebenden Bereichen hergestellt. Hierdurch werden bei der resultierenden Lackierung besonders sanfte Übergänge zwischen den Sensorbereichen und den umgebenden Bereichen erzielt, so dass ein optisch optimales Ergebnis erreicht wird. Die Herstellung von flach verlaufenden Übergängen kann in besonders vorteilhafter und präziser Weise mittels einer Laserbehandlung erreicht werden.

Die Erfindung umfasst weiterhin ein Verfahren zur Lackierung eines Werkstücks, wobei das Werkstück in der oben beschriebenen Weise mindestens einen Sensorbereich mit einem oder gegebenenfalls mehreren integrierten Sensoren aufweist. Für dieses Verfahren wird die oben beschriebene Transferlackfolie bzw. eine mit dem beschriebenen Herstellungsverfahren herstellbare Transferlackfolie verwendet und auf das zu lackierende Werkstück aufgebracht, wobei der oder die Bereiche der Transferlackfolie mit der erhöhten Strahlungsdurchlässigkeit auf den jeweiligen Sensorbereich des Werkstücks platziert bzw. positioniert werden. Hierbei wird die Transferlackfolie derart auf das Werkstück aufgebracht, dass die Seite der mindestens einen Lackschicht (lackschichtige Seite) auf der Oberfläche des Werkstücks liegt. Nach der Fixierung der Transferlackfolie, die nach üblichen Methoden erfolgen kann, beispielsweise durch Anpressen, kann nach der entsprechenden Anhaftung der mindestens einen Lackschicht die Trägerschicht der Transferlackfolie entfernt werden. Im einfachsten Fall kann die beispielsweise in Form einer Kunststofffolie ausgebildete Trägerschicht abgezogen werden. Hierbei kann es durchaus vorgesehen sein, das die Trägerschicht noch für einige Zeit auf der lackierten Oberfläche verbleibt und erst später abgezogen wird, um einen Schutz der Lackierung beispielsweise bei einem Transport zu ermöglichen.

Für die Aufbringung bzw. Applikation der Transferlackfolie auf dem Werkstück können an sich bekannte Werkzeuge oder Apparaturen verwendet werden, beispielsweise Werkzeuge, die ein blasenfreies Aufbringen erleichtern, wie es beispielsweise in der DE 10 2017 208 038 A1 beschrieben ist.

In besonders bevorzugter Weise handelt es sich bei dem Werkstück um eine Karosserie und/oder ein Karosserieteil, insbesondere eine Karosserie und/oder ein Karosserieteil eines Kraftfahrzeugs, mit mindestens einem in die Karosserie oder das Karosserieteil integrierten Sensor oder einem an der Karosserie oder an dem Karosserieteil angeordneten Sensor, wobei ein Oberflächenbereich der Karosserie oder des Karosserieteils, unter oder hinter der oder dem der Sensor angeordnet ist, den mindestens einen Sensorbereich bildet.

Besonders bevorzugt besteht das Werkstück selbst zumindest teilweise, vorzugsweise vollständig, aus einem Material, das für elektromagnetische Wellen von und zu dem oder den Sensoren durchlässig ist. Ein geeignetes Material wäre beispielsweise Polycarbonat.

Beispiele geeigneter Sensoren wurden bereits genannt.

Besonders bevorzugt handelt es sich bei dem Werkstück um ein Teil der Front oder des Hecks eines Kraftfahrzeugs, beispielsweise um eine Front- oder Heckabdeckung aus Kunststoff. Grundsätzlich kann das Werkstück aber auch eine Innenraumverkleidung sein.

Prinzipiell eignet sich die erfindungsgemäße Transferlackfolie auch für die Lackierung von Werkstücken, die nicht Teil von Kraftfahrzeugen sind. Auch außerhalb des Kraftfahrzeugbaus gibt es einen Bedarf an versteckten, nicht auf den ersten Blick zu erkennenden Sensoren. Zur Maskierung eines solchen Sensors kann die erfindungsgemäße Transferlackfolie dienen.

In einer besonders bevorzugten und zweckmäßigen Ausgestaltung des Verfahrens zur Lackierung eines Werkstücks unter Verwendung der erfindungsgemäßen Transferlackfolie erfolgt die Aufbringung der Transferlackfolie auf das Werkstück mittels einer haftvermittelnden Schicht. Die haftvermittelnde Schicht kann hierbei auf die Lackschichtseite der Transferlackfolie und/oder auf die Oberfläche des Werkstücks zumindest bereichsweise aufgebracht werden. Hierfür können im Bereich der Transferlack-Techniken übliche Kleberschichten verwendet werden, beispielsweise auf der Basis von Polyurethan oder anderem.

In der Ausführungsform der Transferlackfolie, bei der die Bereiche mit erhöhter Strahlungsdurchlässigkeit durch eine verringerte Schichtdicke der Lackschicht(en) gebildet werden, kann in einer besonders vorteilhaften Ausgestaltung mit Hilfe der haftvermittelnden Schicht der Unterschied in der Schichtdicke zwischen den Bereichen der Lackschicht(en) mit und ohne verringerte Schichtdicke ausgeglichen werden. Mit anderen Worten kann die abgetragenen Lackschicht in den Bereichen mit verringerter Schichtdicke durch das Material der haftvermittelnden Schicht ersetzt werden, sodass die Oberfläche der resultierenden Lackierung völlig plan ist und optisch kein Unterschied zwischen den Sensorbereichen und den umgebenden Bereichen trotz der dünneren Lackschicht auszumachen ist. In besonders bevorzugter Weise werden daher als Materialien für die haftvermittelnde Schicht Materialien eingesetzt, die für elektromagnetische Strahlung optimal durchlässig sind und auch bei einer dickeren Schichtdicke der haftvermittelnden Schicht keine negative Beeinflussung der Sensorfunktion eintritt.

Weiterhin kann es vorgesehen sein, dass vor dem Aufbringen der Transferlackfolie auf das Werkstück das Werkstück zunächst mit einer Grundierung und/oder mit mindestens einer ersten Lackschicht behandelt bzw. lackiert wird.

Weiterhin kann es vorgesehen sein, dass nach dem Aufbringen der Transferlackfolie und gegebenenfalls nach dem Entfernen der Trägerschicht derTransferlackfolie eine weitere Schicht, insbesondere eine weitere Lackschicht, beispielsweise eine Klarlackschicht, auf das Werkstück aufgebracht wird oder eine andere abschließende Behandlung der Lackierung vorgenommen wird.

Die Aufbringung einer weiteren Lackschicht ist insbesondere für die Ausführungsform der Transferlackfolie, bei derderoderdie Bereiche mit erhöhter Strahlungsdurchlässigkeit durch die mindestens eine Durchbrechung realisiert sind, besonders vorteilhaft. Durch eine Überlackierung, beispielsweise mit einem pigmentfreien Klarlack, kann eine optimal schützender Lackbeschichtung erreicht werden, da hierdurch auch die Durchbrechungen in der/den (farbigen) Lackschicht(en) der Transferlackfolie abgedeckt und gegebenenfalls auch ausgefüllt werden, ohne dass die Durchlässigkeit für elektromagnetische Strahlung in diesen Bereichen vermindert würde. Vorteilhafterweise wird für eine solche Überlackierung ein Lack verwendet, der für elektromagnetische Strahlung optimal durchlässig ist. Die Überlackierung kann zweckmäßigerweise als nachfolgender Schritt nach der Aufbringung der Transferfolie auf das Werkstück und der Entfernung der Trägerschicht erfolgen.

Schließlich umfasst die Erfindung ein lackiertes Werkstück, das mit dem beschriebenen Verfahren hergestellt ist oder herstellbar ist. Bezüglich weiterer Merkmale dieses lackierten Werkstücks, bei dem es sich insbesondere um eine Karosserie und/oder um ein Karosserieteil eines Kraftfahrzeugs mit einem oder mehreren integrierten Sensoren handelt, wird auf die obige Beschreibung verwiesen.

In Übereinstimmung mit den obigen Ausführungen zeichnet sich ein gemäß der Erfindung herstellbares lackiertes Werkstück besonders bevorzugt durch die folgenden Merkmale a. bis c. aus:
a. Das Werkstück ist eine Karosserie und/oder ein Karosserieteil, insbesondere eine Karosserie und/oder ein Karosserieteil eines Kraftfahrzeugs, mit mindestens einem in die Karosserie oder das Karosserieteil integrierten Sensor oder einem an der Karosserie oder an dem Karosserieteil angeordneten Sensor, wobei ein Oberflächenbereich der Karosserie oder des Karosserieteils, unter oder hinter der oder dem der Sensor angeordnet ist oder der durch den Sensor gebildet wird, einen Sensorbereich bildet.
b. Das Werkstück weist auf seiner Oberfläche eine Lackschicht auf, welche mindestens einen Bereich mit einer Durchlässigkeit für elektromagnetische Strahlung umfasst, die gegenüber der Durchlässigkeit für elektromagnetische Strahlung des umgebenden Bereichs erhöht ist.
c. Der Bereich der Transferlackfolie mit der erhöhten Strahlungsdurchlässigkeit ist auf dem Sensorbereich des Werkstücks platziert.

Weitere Merkmale und Vorteile der Erfindung ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein.

### KURZBESCHREIBUNG DER ZEICHNUNGEN

In den Zeichnungen zeigen
- Fig. 1A,B: schematische Darstellungen einer Transferlackfolie im Querschnitt vor (Fig. 1A) und nach (Fig. 1B) Erzeugung eines Bereichs mit verringerter Schichtdicke der Lackschicht,
- Fig. 2A,B,C: schematische Darstellungen von Teilschritten bei der Lackierung eines Werkstücks im Querschnitt unter Verwendung der erfindungsgemäßen Transferlackfolie gemäß Fig. 1,
- Fig. 3: schematische Darstellung einer Transferlackfolie in Aufsicht mit einem Bereich mit mehrfach durchbrochener Lackschicht, und
- Fig. 4: schematische Darstellung eines lackierten Werkstücks im Querschnitt unterVerwendung der Transferlackfolie gemäß Fig. 3.

### DETAILLIERTE BESCHREIBUNG DER AUSFÜHRUNGSBEISPIELE

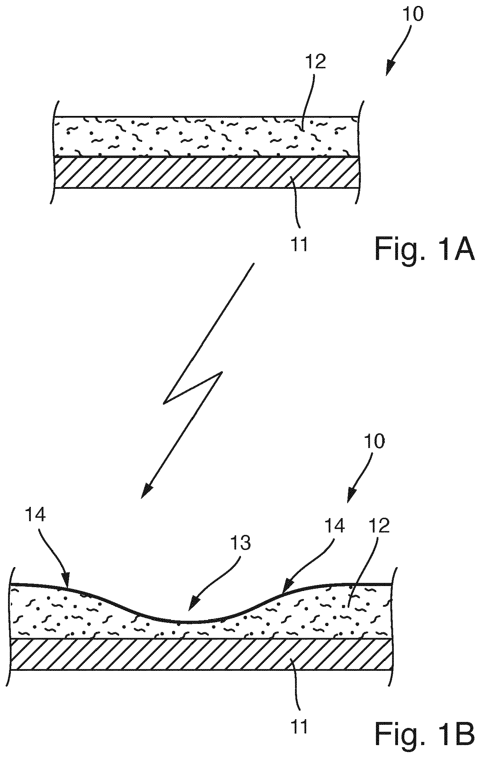

Fig. 1A und 1B illustrieren die Herstellung einer erfindungsgemäßen Transferlackfolie 10. **Fig. 1A** zeigt im Querschnitt in schematischer Weise als Ausgangspunkt fürdie Erzeugung eines Bereichs mit verringerter Schichtdicke eine Transferlackfolie 10, die aus einem Schichtverbund besteht, der eine flächige Trägerschicht 11, insbesondere eine Kunststofffolie, und eine darauf aufgebrachte Lackschicht 12 umfasst. **Fig. 1B** illustriert die Erzeugung eines Bereichs 13 innerhalb der Lackschicht 12 der Transferlackfolie 10, wobei der Bereich 13 eine verringerte Schichtdicke gegenüber der ansonsten gleichmäßigen Schichtdicke des umgebenden Bereichs der Lackschicht 12 aufweist. Der Bereich 13 mit verringerter Schichtdicke zeichnet sich durch eine erhöhte Durchlässigkeit für elektromagnetische Strahlung im Vergleich mit dem umgebenden Bereich der Lackschicht 12 aus. Die Verringerung der Schichtdicke im Bereich 13 wird durch eine Behandlung mit elektromagnetischer Strahlung, insbesondere durch eine Laserbehandlung (hier angedeutet durch einen gezackten Pfeil), erzeugt, wobei durch diese Behandlung die Lackschicht im Bereich 13 teilweise abgetragen wird. In den Randbereichen 14 des Bereichs 13 wird ein flach verlaufender Übergang zu den Bereichen der Lackschicht 12 mit unveränderter Schichtdicke erzeugt, so dass nach dem Applizieren der Lackschicht 12 auf dem Werkstück ein kontinuierlicher, insbesondere stufenfreier Übergang des Lacks zwischen den Bereichen mit verringerter Schichtdicke und der nicht verringerten Schichtdicke gewährleistet wird.

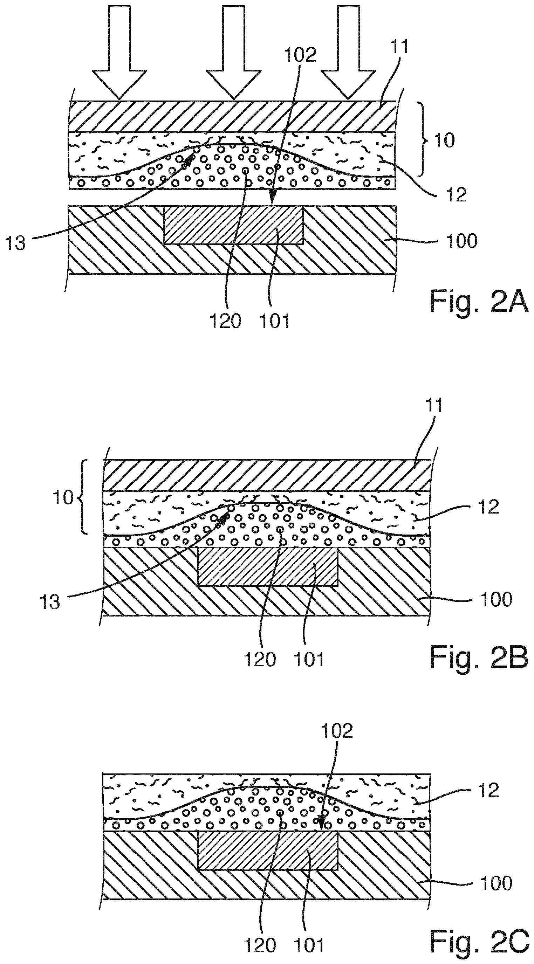

Fig. 2A, 2B und 2C illustrieren die Schritte bei der Lackierung eines Werkstücks 100 unter Verwendung der erfindungsgemäßen Transferlackfolie 10. In das Werkstück 100 ist ein Sensor 101 integriert. Dessen obenliegende Seite bildet den Sensorbereich 102, der von dem Bereich der Lackschicht mit der verringerten Schichtdicke bedeckt werden soll. Beispielsweise handelt es sich bei dem Werkstück 100 um ein Karosserieteil für ein Kraftfahrzeug. Bei dem Sensor 101 handelt es sich beispielsweise um einen integrierten Abstandssensor.

Vor der Aufbringung der Transferlackfolie 10 auf das Werkstück 100 wird die Lackschichtseite der Transferlackfolie 10 mit einer haftvermittelnden Schicht 120, insbesondere einer Kleberschicht z. B. aus Polyurethan, versehen. Das haftvermittelnde Material wird dabei so aufgetragen, dass es auch in die Bereiche 13 mit verringerter Schichtdicke eindringt. Prinzipiell kann die haftvermittelnde Schicht auch auf die Oberfläche des Werkstückes 100 aufgetragen werden. Die Transferlackfolie 10 wird mit der lackseitigen Seite, die mit der haftvermittelnden Schicht 120 versehen ist, auf dem Werkstück 100 derart platziert, dass der Bereich 13 der Lackschicht, der sich durch die verringerte Schichtdicke auszeichnet, auf dem Sensorbereich 102 positioniert wird (**Fig. 2A**). Zum flächigen und blasenfreien Aufbringen der Transferlackfolie 10 auf der Oberfläche des Werkstücks 100 wird vorzugsweise die Transferlackfolie 10 auf der Oberfläche des Werkstücks in an sich bekannter Weise angepresst, hier angedeutet durch die Pfeile. Hierdurch wird eine haftende Verbindung zwischen der Lackschicht 12 der Transferlackfolie 10 und der Oberfläche des Werkstücks 100 hergestellt (**Fig. 2B**). Anschließend kann in an sich üblicher Weise die Trägerschicht 11 abgezogen werden, so dass im Prinzip die Aufbringungder Lackschicht 12 auf der Oberfläche des Werkstücks 100 abgeschlossen ist (**Fig. 2C**). Prinzipiell können noch weitere abschließende Schichten, beispielsweise ein Klarlack oder Ähnliches, aufgebracht werden.

Durch diese Lackierung mittels der erfindungsgemäßen Transferlackfolie 10 wird erreicht, dass selektiv im Bereich oberhalb des integrierten Sensors 101 eine Lackschicht 12 mit verringerter Schichtdicke angeordnet ist, so dass eine ausreichende Durchgängigkeit für elektromagnetische Strahlung, die von dem Sensor 101 ausgesendet und/oder empfangen wird, erreicht wird und die Funktionsfähigkeit des integrierten Sensors 101 gewährleistet ist. Gleichzeitig wird ein optisch optimales Ergebnis erzielt, indem der Sensor 101 vollständig überlackiert ist und sanfte Übergänge zu den umliegenden Bereichen hergestellt sind.

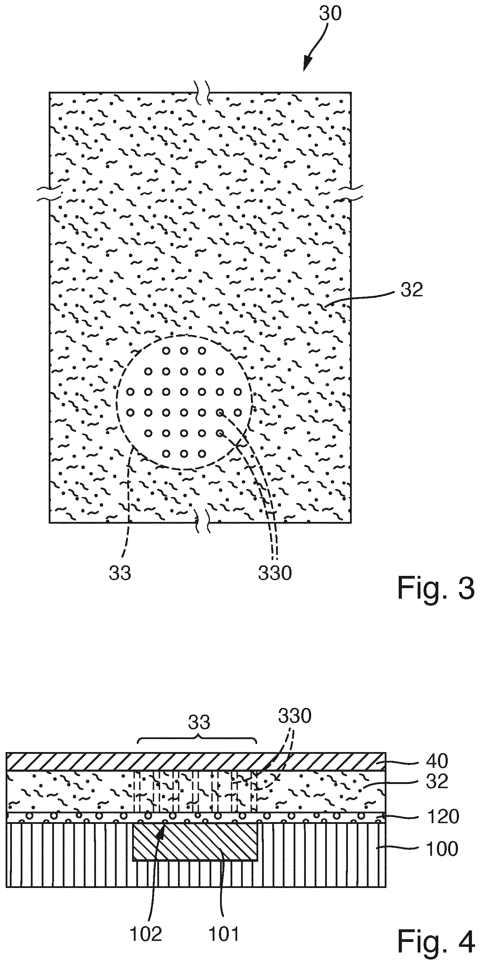

**Fig. 3** illustriert eine weitere Ausführungsform der erfindungsgemäßen Transferlackfolie 30. Dargestellt ist eine Aufsicht auf die Transferlackfolie 30, wobei die Lackschicht 32 dem Betrachter zugewandt ist. Die Trägerschicht der Transferlackfolie 30 ist in dieser Darstellung nicht zu erkennen. In diesem Ausführungsbeispiel umfasst der Bereich 33, der sich durch eine erhöhte Durchlässigkeit für elektromagnetische Strahlung auszeichnet, eine Mehrzahl von regelmäßigen Durchbrechungen 330 in der Lackschicht 32.

**Fig. 4** zeigt ein lackiertes Werkstück 100 mit einem integrierten Sensor 101, wobei die Lackierung auf der Verwendung der Transferlackfolie 30 aus Fig. 3 basiert. Die obenliegende Seite des Sensors 101 bildet den Sensorbereich 102. Eine haftvermittelnde Schicht 120 sorgt für eine haftende Verbindung der Lackschicht 32 auf der Oberfläche des Werkstücks 100. Die Trägerschicht der Transferlackfolie 30 ist zu diesem Zeitpunkt bereits entfernt. Die Oberfläche der Lackschicht 32 ist mit einer Klarlackschicht 40 überlackiert. Oberhalb des Sensorbereichs 102 befindet sich der Bereich 33, der infolge der dort vorhandenen Durchbrechungen 330 sich durch eine erhöhte Durchlässigkeit für elektromagnetische Strahlung auszeichnet und so die volle Funktionsfähigkeit des Sensors 101, die auf dem Senden und/oder Empfangen von Signalen auf der Basis von elektromagnetischer Strahlung basiert, gewährleistet. Durch spezielle Ausgestaltungen und Anordnungen der Durchbrechungen 330 können darüber hinaus auch bestimmte optische Effekte in diesem Bereich 33 erzielt werden.

## Patentansprüche

1. Transferlackfolie (10; 30) zur Lackierung eines Werkstücks (100), wobei die Transferlackfolie (10; 30) die folgenden Merkmale aufweist:
a. die Transferlackfolie (10; 30) ist ein Schichtverbund,
b. der Schichtverbund umfasst eine Trägerschicht (11) und mindestens eine Lackschicht (12; 32),
sowie das kennzeichnende Merkmal:
c. die mindestens eine Lackschicht (12; 32) weist mindestens einen Bereich (13; 33) auf, der sich durch eine erhöhte Durchlässigkeit für elektromagnetische Strahlung im Vergleich mit dem umgebenden Bereich auszeichnet.

2. Transferlackfolie nach Anspruch 1 mit wenigstens einem der folgenden Merkmale:
a. In dem Bereich (33) wird die erhöhte Durchlässigkeit für die elektromagnetische Strahlung durch mindestens eine durch die mindestens eine Lackschicht (32) geführte Durchbrechung bewirkt.
b. Der Bereich (13) mit erhöhter Durchlässigkeit für elektromagnetische Strahlung weist eine Schichtdicke auf, die gegenüber der Schichtdicke des den Bereich (13) umgebenden Bereichs verringert ist.

3. Transferlackfolie nach Anspruch 2 mit mindestens einem der folgenden zusätzlichen Merkmale:
a. Bei der mindestens einen Durchbrechung handelt es sich um eine Mehrzahl von Löchern (330), die die Lackschicht (32) in dem Bereich (33) durchdringen.
b. Die Löcher (330) weisen einen Durchmesser im Bereich von 0,1 µm bis 500 µm auf.

4. Transferlackfolie nach einem der vorhergehenden Ansprüche mit dem zusätzlichen Merkmal:
a. die Transferlackfolie (10; 30) ist zur Lackierung eines Werkstücks (100) vorgesehen, das mindestens einen Sensorbereich (102) aufweist, wobei der Bereich (13; 33) der Lackschicht (12; 32) mit erhöhter Durchlässigkeit für elektromagnetische Strahlung zur Überdeckung des Sensorbereichs (102) vorgesehen ist.

5. Transferlackfolie nach einem der vorhergehenden Ansprüche mit wenigstens einem der folgenden Merkmale:
a. der Bereich (13; 33) der mindestens einen Lackschicht (12; 32) mit erhöhter Durchlässigkeit für elektromagnetische Strahlung ist durch eine Behandlung mit elektromagnetischer Strahlung, insbesondere durch eine Laserbehandlung, erzeugt,
b. der Bereich (13; 33) der mindestens einen Lackschicht mit erhöhter Durchlässigkeit für elektromagnetische Strahlung ist durch eine Behandlung mit mechanischen Mitteln erzeugt.

6. Transferlackfolie nach einem der vorhergehenden Ansprüche mit dem zusätzlichen Merkmal:
a. der Bereich (13) in der mindestens einen Lackschicht mit erhöhter Durchlässigkeit für elektromagnetische Strahlung wird von einem Bereich mit verringerter Schichtdicke der Lackschicht gebildet, der einen flach verlaufenden Übergang (14) zu dem umgebenden Bereich der mindestens einen Lackschicht (12) ohne verringerte Schichtdicke aufweist.

7. Verfahren zur Herstellung einer Transferlackfolie (10; 30), die ein Schichtverbund mit einer Trägerschicht (11) und mindestens einer Lackschicht (12; 32) ist, wobei das Verfahren den folgenden Schritt umfasst:
a. die Transferlackfolie (10; 30) wird bereichsweise behandelt, um mindestens einen Bereich (13; 33) in der mindestens einen Lackschicht (12; 32) zu erzeugen, dessen Durchlässigkeit für elektromagnetische Strahlung im Vergleich mit dem umgebenden Bereich der Lackschicht erhöht ist.

8. Verfahren nach Anspruch 7 mit wenigstens einem derfolgenden Schritte:
a. bei der bereichsweisen Behandlung wird wenigstens ein Bereich (33) mit mindestens einer durch die mindestens eine Lackschicht (32) geführten Durchbrechung (330) erzeugt,
b. bei der bereichsweisen Behandlung wird wenigstens ein Bereich (13) erzeugt, in dem die Schichtdicke der wenigstens einen Lackschicht gegenüber dem umgebenden Bereich verringert ist.

9. Verfahren nach Anspruch 7 der Anspruch 8 mit wenigstens einem der folgenden Merkmale:
a. die mindestens eine Lackschicht (12; 32) wird zur Erzeugung des mindestens einen Bereichs (13; 33) mit erhöhter Durchlässigkeit für elektromagnetische Strahlung mit elektromagnetischer Strahlung, insbesondere mit Laserstrahlung, bereichsweise behandelt,
b. die mindestens eine Lackschicht (12; 32) wird zur Erzeugung des mindestens einen Bereichs (13; 33) mit erhöhter Durchlässigkeit für elektromagnetische Strahlung mit mechanischen Mitteln bereichsweise behandelt.

10. Verfahren nach einem der Ansprüche 7 bis 9 mit dem zusätzlichen Merkmal:
a. bei der bereichsweisen Behandlungzur Erzeugungdes Bereichs (13) mit verringerter Schichtdicke der Lackschicht wird ein flach verlaufender Übergang (14) zwischen dem Bereich (13) mit erhöhter Durchlässigkeit für elektromagnetische Strahlung und dem umgebenden Bereich hergestellt.

11. Verfahren zur Lackierung eines Werkstücks (100), das mindestens einen Sensorbereich (102) aufweist, mit den Schritten:
a. eine Transferlackfolie (10) gemäß einem der Ansprüche 1 bis 6 wird mit der Seiteder Lackschicht (12; 32) auf das Werkstück (100) aufgebracht, wobei der Bereich (13; 33) der Transferlackfolie (10) mit erhöhter Durchlässigkeit für elektromagnetische Strahlung auf dem Sensorbereich (102) des Werkstücks (100) platziert wird, und
b. die Trägerschicht (11) der Transferlackfolie (10; 30) wird gegebenenfalls entfernt.

12. Verfahren nach Anspruch 11 mit dem zusätzlichen Merkmal:
a. das Werkstück (100) ist eine Karosserie und/oder ein Karosserieteil, insbesondere eine Karosserie und/oderein Karosserieteil eines Kraftfahrzeugs, mit mindestens einem in die Karosserie oder das Karosserieteil integrierten Sensor oder einem an der Karosserie oder an dem Karosserieteil angeordneten Sensor, wobei ein Oberflächenbereich der Karosserie oder des Karosserieteils, unter oder hinter der oder dem der Sensor angeordnet ist oder der durch den Sensor gebildet wird, den mindestens einen Sensorbereich (102) bildet.

13. Verfahren nach Anspruch 11 oderAnspruch 12 mit mindestens einem der folgenden Schritte:
a. zum Aufbringen der Transferlackfolie (10; 30) auf das Werkstück (100) wird die Seite der Lackschicht (12; 32) der Transferlackfolie (10; 30) und/oder das Werkstück (100) zumindest bereichsweise mit einer haftvermittelnden Schicht (120) versehen,
b. vor dem Aufbringen der Transferlackfolie (10; 30) auf das Werkstück (100) wird auf das Werkstück eine Grundierung und/oder mindestens eine erste Lackschicht aufgebracht,
c. nach dem Aufbringen der Transferlackfolie (10; 30) und gegebenenfalls dem Entfernen der Trägerschicht (11) der Transferlackfolie (10; 30) wird eine weitere Schicht (40), insbesondere eine Klarlackschicht, auf das Werkstück (100) aufgebracht.

14. Lackiertes Werkstück, das mit einem Verfahren nach einem der Ansprüche 11 bis 13 hergestellt ist.

15. Lackiertes Werkstück, insbesondere nach Anspruch 14 mit den folgenden Merkmalen:
a. das Werkstück (100) ist eine Karosserie und/oder ein Karosserieteil, insbesondere eine Karosserie und/oder ein Karosserieteil eines Kraftfahrzeugs, mit mindestens einem in die Karosserie oder das Karosserieteil integrierten Sensor oder einem an der Karosserie oder an dem Karosserieteil angeordneten Sensor, wobei ein Oberflächenbereich der Karosserie oder des Karosserieteils, unter oder hinter der oder dem der Sensor angeordnet ist, einen Sensorbereich (102) bildet,
b. das Werkstück weist auf seiner Oberfläche mindestens eine Lackschicht (12; 32) auf, welche mindestens einen Bereich (13; 33) mit einer Durchlässigkeit für elektromagnetische Strahlung umfasst, die gegenüber der Durchlässigkeit für elektromagnetische Strahlung des umgebenden Bereichs erhöht ist,
c. der Bereich (13; 33) der Transferlackfolie (10; 30) mit erhöhter Durchlässigkeit für elektromagnetische Strahlung ist auf dem Sensorbereich (102) des Werkstücks platziert.
